# FASCICULE DE BREVET EUROPEEN

(11) **EP 3 106 382 B1**
(45) Date de publication et mention de la délivrance du brevet: **08.11.2017**
(21) Numéro de dépôt: 16305718.5
(22) Date de dépôt: 14.06.2016
(51) Int. Cl.: B64C 1/06, B64C 1/12, B29C 45/12, B29C 45/14

(54) **PROCÉDÉ DE FABRICATION D'UN PANNEAU DE FUSELAGE PAR SURMOULAGE ET PANNEAU DE FUSELAGE AINSI OBTENU**
HERSTELLUNGSVERFAHREN EINER RUMPFPLATTE DURCH ABFORMEN, UND SO ERHALTENE RUMPFPLATTE
METHOD FOR MANUFACTURING A FUSELAGE PANEL BY OVERMOULDING AND FUSELAGE PANEL THUS OBTAINED

(30) Priorité: 19.06.2015 FR 1555614
(43) Date de publication de la demande: 21.12.2016
(73) Titulaire: Airbus Operations, 31060 Toulouse (FR)
(72) Inventeur: FAROUZ-FOUQUET, Mathias, 31300 Toulouse (FR)
(74) Mandataire: Fantin, Laurent

(56) Documents cités:
- EP-A1- 1 216 816
- EP-A2- 0 370 342
- WO-A2-88/00226
- US-B1- 6 858 276

## Description

La présente invention se rapporte à un procédé de fabrication d'un panneau de fuselage par surmoulage ainsi qu'un panneau de fuselage obtenu à partir dudit procédé.

Un fuselage d'un avion comprend une peau rapportée sur une structure composée d'une première série de renforts transversaux (appelés cadres) disposés dans des plans transversaux et une deuxième série de renforts longitudinaux (appelés des lisses) disposés dans des plans longitudinaux.

Pour la suite de la description, une direction longitudinale est parallèle à un axe longitudinal qui s'étend de la pointe avant à la pointe arrière de l'avion. Un plan longitudinal est un plan contenant l'axe longitudinal et un plan transversal est un plan perpendiculaire à l'axe longitudinal.

Le fuselage d'un avion comprend généralement plusieurs tronçons disposés bout à bout et reliés deux à deux. Chaque tronçon s'étend entre deux plans transversaux et comprend généralement plusieurs panneaux assemblés entre eux.

Certains tronçons du fuselage comprennent des ouvertures, comme par exemple des hublots, qui sont délimitées par des renforts en forme de cadre qui sont reliés à la peau. Selon un premier mode de réalisation, chaque panneau de fuselage d'un avion comprend une plaque métallique, notamment en alliage d'aluminium, qui assure la fonction de la peau et des renforts métalliques, notamment en alliage d'aluminium.

La peau métallique forme une cage de faraday qui assure la protection de l'avion contre la foudre.

Les différents renforts sont reliés par des éléments de liaison directement à la peau ou par l'intermédiaire de pièces intercalaires comme par exemple des équerres, des cales. Ces éléments de liaison sont des éléments rapportés tels que des boulons, des rivets, des vis,... Ce premier mode de réalisation n'est pas pleinement satisfaisant car il requiert un grand nombre de manipulations et d'heures de travail ce qui tend à augmenter les coûts des panneaux de fuselage. De plus, il conduit à augmenter sensiblement la masse de l'avion.

Selon un deuxième mode de réalisation, un panneau de fuselage d'un avion est réalisé en matériau composite. Certains renforts sont reliés à la peau par co-cuisson ce qui permet de supprimer les éléments de liaison rapportés tels que les rivets, les boulons et les vis. Le document EP-1.216.816 décrit un tel mode de réalisation.

Même si ce deuxième mode de réalisation permet de réduire la masse des panneaux de fuselage d'un avion, il n'est pas pleinement satisfaisant car il est relativement complexe à mettre oeuvre. Selon un autre inconvénient, le panneau en matériau composite n'ayant pas une conductivité électrique adaptée, il est nécessaire de rapporter sur la peau un revêtement métallique sous la forme par exemple d'un grillage pour assurer la protection contre la foudre.

Cet ajout conduit à annihiler une partie du gain de masse généré par l'emploi de matériau composite et à accroitre la complexité de mise en oeuvre et donc in fine les coûts des panneaux de fuselage.

Selon un autre mode de réalisation décrit par exemple dans le document WO88/00226, les renforts métalliques sont collés sur la peau métallique. Le collage nécessite un travail préparatoire important et de maintenir les pièces assemblées le temps de la prise de la colle. La présente invention vise à remédier aux inconvénients de l'art antérieur.

A cet effet, l'invention a pour objet un procédé de réalisation d'un panneau de fuselage d'un avion qui comprend une peau et au moins un renfort relié à ladite peau, ladite peau étant obtenue en conformant une plaque métallique selon la géométrie de ladite peau. Le procédé se caractérise en ce qu'au moins un renfort est obtenu par surmoulage.

Cette solution permet d'obtenir une protection contre la foudre, la peau étant métallique, et de supprimer les éléments de liaison rapportés pour relier le ou les renfort(s) à la plaque métallique ce qui tend à réduire la masse embarquée.

Le surmoulage comprend les étapes :
- de positionnement de la plaque métallique dans un moule qui comprend une cavité avec une géométrie identique à celle de ladite plaque métallique et au moins une empreinte avec une géométrie identique à celle du ou des renfort(s) à surmouler, la ou les empreinte(s) débouchant dans la cavité,
- d'injection d'une matière dans la ou les empreintes de manière à obtenir le ou les renfort(s) surmoulé(s),
- de démoulage de la plaque métallique équipée du ou des renfort(s) surmoulé(s).

Avantageusement, la plaque métallique comprend pour au moins un renfort surmoulé, au moins un orifice qui traverse ladite plaque métallique et dans lequel est injectée la matière. De la sorte, ledit renfort surmoulé comprend pour chaque orifice une protubérance encastrée dans la plaque métallique.

De préférence, l'orifice a une section qui augmente entre une première surface de la plaque métallique sur laquelle est positionné le renfort surmoulé et une seconde surface de la plaque métallique opposée à la première surface.

Avantageusement, la matière est injectée dans la ou les empreintes en traversant le ou les orifices.

L'invention a également pour objet un moule pour la mise en oeuvre du procédé qui se caractérise en ce qu'il comprend une première coquille qui comporte une forme concave qui correspond à une première surface de la peau du panneau de fuselage, une deuxième coquille qui comporte une forme convexe qui correspond à une deuxième surface de la peau du panneau de fuselage, au moins l'une des première et deuxième coquilles étant mobiles de manière à occuper une position fermée dans laquelle les première et deuxième coquilles délimitent une cavité ayant une géométrie identique à celle de la peau, et une position écartée, la deuxième coquille comprenant au moins une empreinte avec une géométrie identique à celle d'un renfort à surmouler sur ladite peau.

De préférence, la première coquille comprend au moins un canal d'alimentation en matière à injecter, ledit canal étant positionné de manière à déboucher dans un orifice prévu dans une plaque métallique qui forme la peau et qui est positionnée dans la cavité délimitée par les première et deuxième coquilles en position fermée.

L'invention a également pour objet un panneau de fuselage d'un avion comprenant au moins un renfort surmoulé obtenu à partir du procédé.

D'autres caractéristiques et avantages ressortiront de la description qui va suivre de l'invention, description donnée à titre d'exemple uniquement, en regard des dessins annexés sur lesquels :
- La figure 1A est une vue en perspective d'une première coquille d'un moule à injection qui illustre un premier mode de réalisation de l'invention,
- La figure 1B est une vue en perspective d'une deuxième coquille d'un moule à injection qui illustre un premier mode de réalisation de l'invention,
- La figure 2 est une coupe d'un moule à injection qui illustre un autre mode de réalisation de l'invention,
- La figure 3 est une vue en perspective d'un panneau de fuselage d'un avion réalisé à partir du procédé de l'invention,
- La figure 4 est une coupe selon la ligne IV-IV de la figure 3,
- La figure 5 est une coupe transversale d'un tronçon d'un fuselage d'un avion obtenu en assemblant des panneaux de fuselage réalisé à partir du procédé de l'invention,
- La figure 6 est une coupe selon la ligne VI-VI de la figure 5,
- La figure 7 est une coupe selon la ligne VII-VII de la figure 5,
- La figure 8 est une vue en perspective qui illustre un détail de la figure 5.

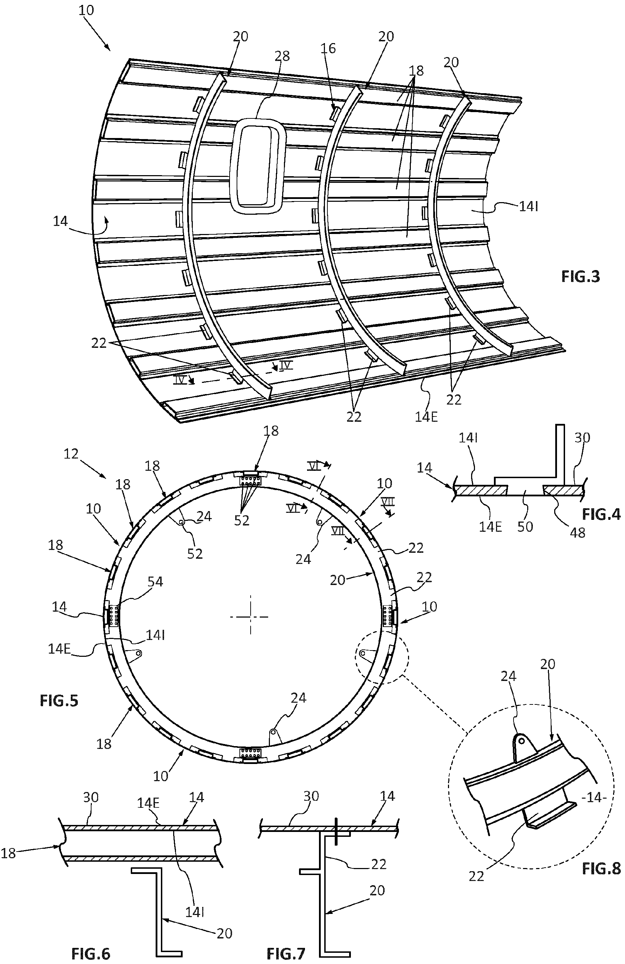

Sur la figure 3, on a représenté en 10 un panneau de fuselage d'un avion. Comme illustré sur la figure 5, plusieurs panneaux 10 peuvent être assemblés de manière à former un tronçon 12. Les tronçons 12 sont assemblés bout à bout de manière à former un fuselage d'un avion. Le fuselage comprend une peau 14 avec une surface intérieure 14I orientée vers l'intérieur du fuselage et une surface extérieure 14E orientée vers l'extérieur du fuselage. Cette peau 14 est rapportée sur une structure 16 qui comprend des renforts longitudinaux 18 (appelés lisses) et des renforts transversaux 20 (appelés cadres).

Selon un mode de réalisation, les renforts longitudinaux 18 sont disposés dans des plans longitudinaux et sont plaqués contre la surface intérieure 14I de la peau 14. Selon les configurations, un renfort longitudinal 18 a une section transversale (dans un plan transversal) en forme de I, de L, d'Oméga. D'autres formes sont envisageables pour la section des renforts longitudinaux 18.

Chaque renfort transversal 20 forme un anneau disposé dans un plan transversal et a des formes permettant le passage des renforts longitudinaux 18. Selon une première variante, les renforts transversaux 20 comprennent des découpes pour permettre le passage des renforts longitudinaux 18. Selon une autre variante visible sur les figures 3, 5 à 8, chaque renfort transversal 20 est espacé de la peau 14 et comprend des pattes 22 pour le relier à la peau 14, lesdites pattes 22 étant espacées pour laisser passer les renforts longitudinaux 18. Selon un mode de réalisation illustré sur les figures 6 et 7, le renfort transversal a une section en forme de Z, la partie centrale de la forme en Z disposée dans un plan transversal étant prolongée par des pattes 22 en forme de L. D'autres formes sont envisageables pour la section des renforts transversaux 20.

Comme illustré sur les figures 5 et 8, les renforts, notamment les renforts transversaux 20, comprennent des excroissances 24 qui assurent la fonction d'attache pour solidariser au moins un élément à la structure de l'avion.

Comme illustré sur la figure 3, le fuselage d'un avion comprend également des ouvertures 26 obturées par des éléments fixes comme dans le cas d'un hublot ou obturées par des éléments mobiles comme dans le cas d'une porte. Chaque ouverture 26 est délimitée par au moins un renfort 28 qui s'étend sur le pourtour de l'ouverture et qui est solidarisé à la peau 14. En fonction de la fonction de l'ouverture, les renforts 28 ont des sections différentes. Comme illustré sur la figure 3, le panneau de fuselage 10 comprend une partie de la peau 14 du fuselage, des segments de renforts longitudinaux 18, des segments de renforts transversaux 20 et éventuellement d'autres renforts comme par exemple pour encadrer une ouverture 26.

Pour la suite de la description, le terme renfort couvre tous les types de renforts reliés à la peau du fuselage d'un avion, comme par exemple un renfort transversal ou un segment de renfort transversal, un renfort longitudinal ou un segment de renfort longitudinal, ou tout autre renfort ou partie de renfort.

Selon l'invention, la peau 14 est métallique. Selon un mode de réalisation, la peau 14 est en alliage d'aluminium. Ainsi, la peau 14 forme une protection contre la foudre.

Selon l'invention, le procédé de réalisation d'un panneau de fuselage d'un avion comprend les étapes de :
- Conformation d'une plaque métallique 30 selon la géométrie de la peau 14 du panneau 10 de fuselage à obtenir, et
- Surmoulage d'au moins un renfort 18, 20, 28.

L'étape de surmoulage permet de relier le ou les renfort(s) surmoulé(s) 18, 20, 28 sans recourir à des éléments de liaison rapportés tels que des rivets, des boulons, des vis ou autres.

Le surmoulage comprend les étapes :
- de positionnement de la plaque métallique 30 dans un moule 32 qui comprend une cavité dont la géométrie est identique à celle de ladite plaque métallique 30 et au moins une empreinte 34 dont la géométrie est identique à celle du ou des renfort(s) 18, 20, 28 à surmouler, la ou les empreinte(s) 34 débouchant dans la cavité,
- d'injection d'une matière dans la ou les empreintes 34 de manière à obtenir au moins un renfort surmoulé 18, 20, 28,
- de démoulage de la plaque métallique 30 équipée du ou des renfort(s) surmoulé(s) 18, 20, 28.

Selon un mode de réalisation, tous les renforts 18, 20, 28 réalisés par surmoulage sont obtenus lors d'une même étape d'injection de matière.

En fonction de la matière injectée, l'ouverture du moule 32 ne sera réalisée qu'après une phase de refroidissement de la matière injectée.

De préférence, la matière injectée est une résine ou une matière plastique. Le choix de la matière dépendra notamment des caractéristiques mécaniques souhaitées pour le ou les renfort(s) surmoulé(s).

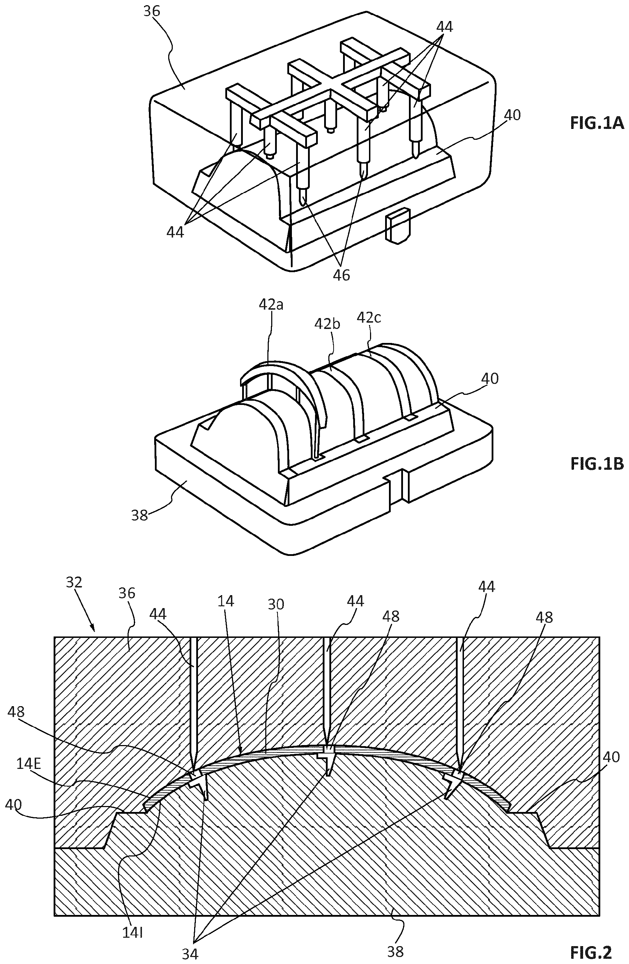

Comme illustré sur les figures 1A, 1B et 2, le moule 32 est réalisé en au moins deux parties, une première coquille 36 (visible sur la figure 1A) et une deuxième coquille 38 (visible sur la figure 1B) mobiles l'une par rapport à l'autre, de manière à occuper une position fermée dans laquelle elles délimitent une cavité étanche à la matière injectée et une position écartée dans laquelle elles permettent l'insertion de la plaque métallique 30 dans la cavité et le démoulage de ladite plaque métallique 30 équipée du ou des renfort(s) surmoulé(s).

Les première et deuxième coquilles 36 et 38 comprennent des surfaces 40, appelées plans de joint, qui sont plaquées les unes contre les autres de manière à obtenir une cavité étanche à la matière injectée.

Ces première et deuxième coquilles 36 et 38 sont montées sur une presse à injection qui assure le mouvement d'au moins l'une des coquilles 36 et 38. La presse à injection n'est pas plus décrite car elle est connue de l'homme du métier.

Selon une première configuration illustrée sur les figures 1A, 1B et 2, la première coquille 36 comprend une forme concave qui correspond à la surface extérieure 14E de la peau et la deuxième coquille 38 comprend une forme convexe qui correspond à la surface intérieure 14I de la peau et une ou plusieurs empreintes 34.

Selon un premier mode de réalisation illustré sur la figure 2, les renforts surmoulés ont des formes sans contre-dépouille pour permettre le démoulage.

Selon un autre mode de réalisation, les renforts surmoulés ont des formes en contre-dépouilles. Dans ce cas, le moule 32 comprend au moins un élément mobile par rapport à au moins une coquille, notamment la deuxième coquille 38, comme des cales montantes, des tiroirs, des noyaux par exemple, pour permettre le démoulage.

Avantageusement, la deuxième coquille 38 représentée en figure 1B comprend ainsi trois cales montantes 42a, 42b, 42c, mobiles entre deux positions : une position de moulage, dans laquelle sont représentées les cales montantes 42b et 42c, et une position d'éjection dans laquelle est représentée la cale 42a. Les cales 42b et 42c sont représentées dans la position de moulage, dans laquelle elles définissent, avec la deuxième coquille 38, une surface de moulage ayant une forme en contre-dépouille, ici la forme en Z pour le moulage des renforts 20. Lors du démoulage, ces cales s'éloignent du reste de la deuxième coquille 38, en même temps que la pièce moulée, selon une trajectoire oblique définie par leurs tiges de guidage, qui leur permet de dégager les formes moulées en contre-dépouille. La cale 42a est ainsi représentée dans sa position de démoulage, liée au reste de la deuxième coquille 38 par ses tiges de guidage.

Par ailleurs, des éléments de centrage peuvent être prévus pour assurer un positionnement précis des première et deuxième coquilles 36 et 38. De préférence, au moins l'une des coquilles 36 ou 38 comprend au moins un éjecteur pour favoriser le démoulage du panneau. Selon un mode de réalisation, les éjecteurs comprennent des tiges métalliques se déplaçant par rapport aux coquilles pendant le démoulage. Ces éléments, qui sont connus de l'homme du métier, ne sont pas décrits plus en détail.

Le moule 32 comprend également au moins un canal 44 pour alimenter la ou les empreinte(s) 34 en matière et des évents pour chasser les gaz lors de l'injection de matière. De préférence, chaque canal 44 comprend une buse 46 configurée pour contrôler l'écoulement de la matière en direction de la ou des empreinte(s) 34. Avantageusement, cette buse 46 est pilotée.

Selon une autre caractéristique de l'invention, la plaque métallique 30 comprend au moins une forme pour améliorer la résistance de la liaison entre le ou les renfort(s) surmoulé(s) et la plaque métallique 30. A cet effet, la plaque métallique 30 comprend, pour chaque renfort surmoulé, au moins un orifice 48 qui traverse ladite plaque métallique 30 et dans lequel est injectée la matière. Ainsi, pour chaque orifice 48, le renfort surmoulé 18, 20, 28 comprend une protubérance 50 encastrée dans la plaque métallique 30.

Pour chaque renfort surmoulé, le nombre d'orifices 48 est déterminé en fonction de la résistance au cisaillement souhaité.

De préférence, chaque orifice 48 a une section qui augmente entre une première surface de la plaque métallique 30 (qui correspond à la surface intérieure 14I de la peau) sur laquelle est positionné le renfort surmoulé 18, 20, 28 et une seconde surface de la plaque métallique 30 opposée à la première surface (qui correspond à la surface extérieure 14E de la peau). Cette configuration permet d'augmenter la résistance en traction et globalement la résistance de la liaison entre le ou les renfort(s) surmoulé(s) et la plaque métallique 30 qui forme la peau 14.

Les orifices 48 ont une section au niveau de la surface intérieure 14I inférieure à la largeur du renfort surmoulé de sorte que les orifices 48 sont dissimulés sous les renforts surmoulés. Selon une configuration, les canaux 44 d'alimentation débouchent au niveau des orifices 48. Ainsi, la matière est injectée dans la ou les empreintes 34 en traversant le ou les orifices 48 ce qui assure un meilleur remplissage des orifices 48 par la matière et donc une liaison par encastrement plus résistante entre la ou les protubérances 50 du renfort surmoulé et la plaque métallique 30.

Si la liaison entre le ou les renfort(s) surmoulé(s) et la plaque métallique 30 n'est pas suffisamment résistance, des éléments de liaison rapportés comme des rivets, des boulons, des vis par exemple sont prévus pour renforcer ladite liaison. Ces éléments de liaison sont bien moins nombreux que pour l'art antérieur car ils ne servent qu'à renforcer si nécessaire la liaison entre les renforts surmoulés et la plaque métallique 30 qui est obtenue par la technique de surmoulage et qui est déjà renforcée grâce à la présence des orifices 48.

De préférence, les renforts surmoulés comprennent des inserts 52 comme des douilles par exemple filetée ou non pour permettre la fixation d'éléments sur la structure de l'avion ou pour relier les panneaux entre eux de manière à former des tronçons.

Ainsi, selon un mode de réalisation, les segments de renforts transversaux 20 comprennent à chacune de leurs extrémités des inserts 52 pour permettre de relier deux segments de renforts transversaux successifs à l'aide d'une éclisse 54 par exemple.

Si le panneau 10 comprend au moins une ouverture 26, la plaque métallique 30 comprend autant de découpes que d'ouvertures 26, chaque découpe ayant une géométrie conforme à celle de l'ouverture correspondante. Les coquilles 36 et 38 sont en contact l'une avec l'autre dans chaque ouverture 26 et une empreinte 34 est prévue sur tout le pourtour de l'ouverture 26.

## Revendications

1. Procédé de réalisation d'un panneau de fuselage d'un avion qui comprend une peau (14) et au moins un renfort (18, 20, 28) relié à ladite peau, ladite peau (14) étant obtenue en conformant une plaque métallique (30) selon la géométrie de ladite peau (14), le procédé étant **caractérisé en ce qu'**au moins un renfort (18, 20, 28) est obtenu par surmoulage.

2. Procédé selon la revendication 1, **caractérisé en ce que** le surmoulage comprend les étapes :
- de positionnement de la plaque métallique (30) dans un moule (32) qui comprend une cavité avec une géométrie identique à celle de ladite plaque métallique (30) et au moins une empreinte (34) avec une géométrie identique à celle du ou des renfort(s) (18, 20, 28) à surmouler, la ou les empreinte(s) (34) débouchant dans la cavité,
- d'injection d'une matière dans la ou les empreintes (34) de manière à obtenir le ou les renfort(s) surmoulé(s) (18, 20, 28),
- de démoulage de la plaque métallique (30) équipée du ou des renfort(s) surmoulé(s) (18, 20, 28).

3. Procédé selon la revendication 2, **caractérisé en ce que** la plaque métallique (30) comprend pour au moins un renfort surmoulé (18, 20, 28), au moins un orifice (48) qui traverse ladite plaque métallique (30) et dans lequel est injectée la matière, de sorte à ce que ledit renfort surmoulé (18, 20, 28) comprend pour chaque orifice (48) une protubérance (50) encastrée dans la plaque métallique (30).

4. Procédé selon la revendication 3, **caractérisé en ce que** l'orifice (48) a une section qui augmente entre une première surface de la plaque métallique (30) sur laquelle est positionné le renfort surmoulé (18, 20, 28) et une seconde surface de la plaque métallique (30) opposée à la première surface.

5. Procédé selon la revendication 3 ou 4, **caractérisé en ce que** la matière est injectée dans la ou les empreintes (34) en traversant le ou les orifices (48).

6. Moule pour la mise en oeuvre du procédé selon l'une des revendications précédentes, **caractérisé en ce qu'**il comprend une première coquille (36) qui comporte une forme concave qui correspond à une première surface de la peau (14) du panneau de fuselage, une deuxième coquille (38) qui comporte une forme convexe qui correspond à une deuxième surface de la peau (14) du panneau de fuselage, au moins l'une des première et deuxième coquilles (36, 38) étant mobiles de manière à occuper une position fermée dans laquelle les première et deuxième coquilles (36, 38) délimitent une cavité ayant une géométrie identique à celle de la peau (14), et une position écartée, la deuxième coquille (38) comprenant au moins une empreinte (34) avec une géométrie identique à celle d'un renfort à surmouler sur ladite peau (14).

7. Moule selon la revendication 6, **caractérisé en ce que** la première coquille (36) comprend au moins un canal (44) d'alimentation en matière à injecter, ledit canal (44) étant positionné de manière à déboucher dans un orifice (48) prévu dans une plaque métallique (30) qui forme la peau (14) et qui est positionnée dans la cavité délimitée par les première et deuxième coquilles (36, 38) en position fermée.

8. Panneau de fuselage d'un avion comprenant au moins un renfort surmoulé obtenu à partir du procédé selon l'une des revendications 1 à 5.

## Patentansprüche

1. Verfahren zur Herstellung einer Rumpfplatte eines Flugzeugs, das eine Haut (14) und wenigstens eine mit der Haut verbundene Aussteifung (18, 20, 28) aufweist, wobei die Haut (14) dadurch hergestellt wird, dass eine Metallplatte (30) mit der Geometrie der Haut (14) in Übereinstimmung gebracht wird, und wobei das Verfahren **dadurch gekennzeichnet ist, dass** wenigstens eine Aussteifung (18, 20, 28) durch Überformen erhalten wird.

2. Verfahren nach Anspruch 1, **dadurch gekennzeichnet, dass** das Überformen die Verfahrensschritte umfasst:
- Einbringen der Metallplatte (30) in eine Form (32), die einen Hohlraum mit einer Geometrie aufweist, die zu derjenigen der Metallplatte (30) identisch ist, und wenigstens eine Vertiefung (34) mit einer Geometrie aufweist, die mit derjenigen der zu überformenden Versteifung(en) (18, 20, 28) identisch ist, wobei die Vertiefung(en) (34) in den Hohlraum münden,
- Injizieren von Material in die Vertiefung(en) (34) um auf diese Weise die zu überformende(n) Aussteifung(en) (18, 20, 28) zu erhalten,
- Entformen der mit der oder den überformten Aussteifung(en) (18, 20, 28) versehenen Metallplatte (30).

3. Verfahren nach Anspruch 2, **dadurch gekennzeichnet, dass** die Metallplatte (30) für wenigstens eine überformte Aussteifung (18, 20, 28) wenigstens eine Öffnung (48) aufweist, die die Metallplatte (30) durchquert und in die das Material injiziert wird, so dass die überformte Aussteifung (18, 20, 28) für jede Öffnung (48) eine Ausbuchtung (50) aufweist, die in die Metallplatte (30) eingefügt ist.

4. Verfahren nach Anspruch 3, **dadurch gekennzeichnet, dass** die Öffnung (48) einen Querschnitt aufweist, der sich zwischen einer ersten Oberfläche der Metallplatte (30), auf der die überformte Aussteifung (18, 20, 28) angeordnet ist, und einer der ersten Oberfläche entgegengesetzten Oberfläche der Metallplatte (30) aufweitet.

5. Verfahren nach Anspruch 3 oder 4, **dadurch gekennzeichnet, dass** das Material durch die Öffnung(en) (48) hindurch in die Vertiefung(en) (34) injiziert wird.

6. Form für die Ausführung des Verfahrens nach einem der vorhergehenden Ansprüche, **dadurch gekennzeichnet, dass** diese eine erste Schale (36) aufweist, die über eine konkave Form verfügt, die einer ersten Oberfläche der Haut (14) der Rumpfplatte entspricht, und eine zweite Schale (38) aufweist, die über eine konvexe Form verfügt, die einer zweiten Oberfläche der Haut (14) der Rumpfplatte entspricht, wobei wenigstens einer der ersten und zweiten Schalen (36, 38) beweglich ist, um auf diese Weise eine geschlossene Stellung einzunehmen, in der die erste und zweite Schale (36, 38) einen Hohlraum begrenzen, der eine Geometrie aufweist, die identisch zu derjenigen der Haut (14) ist, und um eine versetzte Stellung einzunehmen, wobei die zweite Schale (38) wenigstens eine Vertiefung (34) mit einer Geometrie aufweist, die identisch zu derjenigen einer auf der Haut (14) zu überformenden Aussteifung ist.

7. Form nach Anspruch 6, **dadurch gekennzeichnet, dass** die erste Schale (36) wenigstens einen Kanal (44) für die Zufuhr des zu injizierenden Materials aufweist, wobei der Kanal (44) derart angeordnet ist, dass dieser in eine Öffnung (48) mündet, die in einer Metallplatte (30) vorgesehen ist, die die Haut (14) bildet und die in dem Hohlraum angeordnet ist, den die erste und zweite Schale (36, 38) in der geschlossenen Stellung begrenzt.

8. Rumpfplatte eines Flugzeugs mit wenigstens einer überformten Verstärkung, die auf der Grundlage des Verfahrens nach einem der Ansprüche 1 bis 5 hergestellt worden ist.

## Claims

1. A process for constructing an aircraft fuselage panel comprising a skin (14) and at least one reinforcement (18, 20, 28) attached to said skin, said skin (14) being obtained by shaping a metal sheet (30) according to the geometry of said skin (14), the process being **characterized in that** at least one reinforcement (18, 20, 28) is obtained by overmolding.

2. The process as claimed in claim 1, wherein overmolding comprises the stages of:
- positioning the metal sheet (30) in a mold (32) comprising a cavity of the same geometry as that of said metal sheet (30) and at least one recess (34) having the same geometry as that of the reinforcement or reinforcements (18, 20, 28) which have to be overmolded, the recess or recesses (34) opening into the cavity,
- injecting a material into the recess or recesses (34) so as to obtain the overmolded reinforcement or reinforcements (18, 20, 28),
- turning out the metal sheet (30) provided with the overmolded reinforcement or reinforcements (18, 20, 28).

3. The process as claimed in claim 2, wherein the metal sheet (30) comprises for at least one overmolded reinforcement (18, 20, 28), at least one opening (48) passing through said metal sheet (30) into which the material is injected so that said overmolded reinforcement (18, 20, 28) comprises a protuberance (50) embedded in the metal sheet (30) for each orifice (48).

4. The process as claimed in claim 3, wherein the opening (48) has a cross-section which increases in size between a first surface of the metal sheet (30) on which the overmolded reinforcement (18, 20, 28) is positioned and a second surface of the metal sheet (30) opposite the first surface.

5. The process as claimed in claim 3 or 4, wherein the material is injected into the recess or recesses (34) passing through the opening or openings (48).

6. A mold for implementing the process as claimed in any one of the preceding claims, wherein it comprises a first shell (36) having a concave shape corresponding to a first surface of the skin (14) of the fuselage panel, a second shell (38) comprising a convex shape corresponding to a second surface of the skin (14) of the fuselage panel, at least one of the first and second shells (36, 38) being capable of being moved so as to occupy a closed position in which the first and second shells (36, 38) bound a cavity having a geometry identical to that of the skin (14), and a parted position, the second shell (38) comprising at least one recess (34) having the same geometry as that of a reinforcement which has to be overmolded onto said skin (14).

7. The mold as claimed in claim 6, wherein the first shell (36) comprises at least one feed channel (44) for material which has to be injected, said channel (44) being positioned in such a way as to open out into an opening (48) provided in a metal sheet (30) forming the skin (14) and positioned in the cavity bounded by the first and second shells (36, 38) when in the closed position.

8. An aircraft fuselage panel comprising at least one overmolded reinforcement obtained using the process as claimed in any one of claims 1 to 5.
